# EUROPÄISCHE PATENTSCHRIFT

(11) **EP 0 993 704 B1**
(45) Veröffentlichungstag und Bekanntmachung des Hinweises auf die Patenterteilung: **10.02.2010**
(21) Anmeldenummer: 98939562.9
(22) Anmeldetag: 30.06.1998
(51) Int. Cl.: H04B 1/66

(54) **VERFAHREN UND VORRICHTUNG ZUM CODIEREN VON SIGNALEN**
METHOD AND DEVICE FOR SIGNAL CODING
PROCEDE ET DISPOSITIF POUR CODER DES SIGNAUX

(30) Priorität: 01.07.1997 DE 19727938
(43) Veröffentlichungstag der Anmeldung: 19.04.2000
(60) Teilanmeldung: 05003651.6
(73) Patentinhaber: MAYAH Communications GMBH, 85399 Hallbergmoos (DE)
(72) Erfinder: WIESE, Detlef, D-85354 Freising (DE); RIMKUS, Jörg, D-24943 Flensburg (DE)
(74) Vertreter: Eisenführ, Speiser & Partner
(86) Internationale Anmeldenummer: PCT/EP1998/003981
(87) Internationale Veröffentlichungsnummer: WO 1999/001948

(56) Entgegenhaltungen:
- EP-A- 0 596 648
- DE-A- 4 135 977
- US-A- 4 899 384

## Beschreibung

Die Erfindung betrifft ein Verfahren zum Codieren von digitalisierten Tonsignalen mit einer Codiereinrichtung zur Codierung des Tonsignals in einem Codierformat und einer Verarbeitungseinrichtung zur Verarbeitung des codierten Tonsignals.

Derartige Verfahren sind beispielsweise aus der europäischen Patentschrift 290581 bekannt. Dort werden bei der bitratenreduzierenden Codierung von Tonsignalen, die bereits in digitalisierter Form, z. B. 48 kHz Abtastfrequenz / 16-bit-Auflösung, vorliegen, psychoakustische Phänomene der Wahrnehmung von Tonsignalen derart genutzt, daß die ursprüngliche Bitrate der Tonsignale erheblich reduziert wird. Solche Verfahren sind auch unter der Bezeichnung "Quellcodierung" geläufig und standardisiert (ISO 11172 und 11318).

Bei einigen Codierverfahren gibt es ferner die Möglichkeit, das Tonsignal in einem bestimmten Übertragungs- bzw. Speicherformat zu codieren, um anschließend das Tonsignal übertragen und/oder speichern zu können. Diese Codierung führt jedoch häufig zu der Notwendigkeit, die Tonsignale umzucodieren hinsichtlich des verwendeten Übertragungs- bzw. Speicherformats, da der dann tatsächlich verwendete Übertragungskanal oder die tatsächlich verwendete Speichervorrichtung ein anderes Codierformat verwendet. Dies führt dazu, wenn die notwendigen Umcodieralgorithmen zur Umcodierung des Tonsignals zur Anpassung an das tatsächliche Codierformat nicht vorhanden sind, daß eine vollständige Decodierung des Tonsignals in ein lineares, nicht datenreduziertes Format und eine anschließende Codierung in das gewünschte Format vorgenommen werden muß. Dies führt häufig zu mehr oder weniger starken Qualitätsverlusten. Entweder es wird dieser aufwendige Weg gegangen oder eine Anpassung ist nicht möglich.

Aufgabe der Erfindung ist es, ein Verfahren der eingangs erwähnten Art zur Verfügung zu stellen, welches die oben genannten Probleme löst und bei dem Umcodierungen nach einmal erfolgter Codierung weitestgehend vermieden werden.

Diese Aufgabe wird erfindungsgemäß mit einem Verfahren mit den Merkmalen nach Anspruch 1 gelöst.

Bei dem erfindungsgemäßen Verfahren wird sendeseitig bereits eine Codierung vorgenommen, welche auf die Eigenschaften der angeschlossenen, die Tonsignale weiterverarbeitenden Einrichtungen Rücksicht nimmt. Das heißt, es ist bereits bei der Codierung möglich, die für die angeschlossenen Geräte notwendigen Codierformate zu berücksichtigen und zu verwenden. Es kann insbesondere durch das vorliegende Verfahren eine Codierung vorgenommen werden, die den Möglichkeiten des ausgewählten Übertragungskanals und der empfangsseitigen Decodierung angepasst ist, so daß das Tonsignal in der maximal möglichen Qualität übertragen und empfangen bzw. decodiert werden kann.

Weiterhin ist es durch das erfindungsgemäße Verfahren möglich, in jedem Fall eine aufwendige Umcodierung des codierten Tonsignals zu vermeiden, da das Tonsignal von vornherein in dem richtigen, d. h. den angeschlossenen Geräten, z. B. dem angeschlossenen Speicher oder dem angeschlossenen Übertragungskanal entsprechenden Format codiert wird. Das Verfahren ermöglicht daher nicht nur eine qualitativ höherwertige, sondern auch eine schnellere Übertragung von Tonsignalen.

Die Erfindung zeichnet sich dadurch aus, daß vor der Festlegung des Codieralgorithmus die Eigenschaften bzw. die Eigenschaftsparameter der gewählten Übertragungs- und/oder Speicher- und/oder Decodiereinrichtungen mit Hilfe eines oder mehrerer an die entsprechende Einrichtung gerichteter Testsignale ermittelt werden. Somit ist es dank des erfindungsgemäßen Verfahrens möglich, das zu verwendende Codierformat bzw. den anzuwendenden Codieralgorithmus direkt an die tatsächlich jeweils angeschlossenen Einrichtungen, wie etwa Übertragungskanäle, Speicher oder empfangsseitige Decodiereinrichtungen anzupassen. Eine Person, die Tonsignale übertragen möchte, braucht daher bei dem erfindungsgemäßen Verfahren aufgrund des Testsignals nicht mehr festzustellen bzw. abzugleichen, um welche angeschlossenen Geräte, wie etwa Übertragungskanal, Speicher oder empfangsseitige Decodiereinrichtungen, es sich handelt, wenn sie Tonsignale übertragen oder versenden möchte. Es ist jedoch auch bei der erfindungsgemäßen Lösung möglich, vor der eigentlichen Codierung per Hand die entsprechenden Parameter zur Auswahl des gewünschten Codierformates vorzugeben, um beispielsweise eine Übertragung auch mit Geräten zu ermöglichen, die mit Hilfe des Testsignals nicht erkannt werden. Daher ist mit Hilfe des erfindungsgemäßen Verfahrens in jedem Fall eine Anpassung des Codierformates an die eingesetzten Geräte möglich.

Wenn das zu versendende Tonsignal quellencodiert, d. h. bitratenreduziert vorliegt, ist folgendes durch das erfindungsgemäße Verfahren möglich: Wenn Übertragungs- und/oder Speichereinrichtungen verschiedener Kapazität zur Verfügung stehen, kann unter Berücksichtigung der nach der bitratenreduzierten Codierung noch zu übertragenden Datenmenge ein mit entsprechender Kapazität versehener Übertragungskanal oder eine mit entsprechender Kapazität versehene Speichereinrichtung gewählt werden. So ist es z. B. bei Tonsignalen geringerer Qualität oder bei geringeren Anforderungen an die Empfangsqualität, d. h. mit höherer Redundanz, möglich, einen Übertragungskanal kleinerer Kapazität zu wählen und somit gegebenenfalls Kosten zu sparen.

Die Erfindung findet beispielsweise Anwendung bei einer Übertragung bzw. Speicherung datenreduzierter Tonsignale, die beispielsweise in den Formaten G.711, G.722, MPEG 1 /2-Layer 1, 2, 3 oder MPEG 4 vorliegen. Die Erfindung lässt sich auf alle Systeme anwenden, beispielsweise Transformations- und Teilbandcodierverfahren, adaptive und nicht-adaptive Pulscodemodulationsverfahren mit linearer und nicht-linearer Quantisierung, Kombinationen daraus und andere Toncodierverfahren.

Weiterhin macht sich die Erfindung bestimmte Eigenschaften derartiger Verfahren zunutze. Typischerweise benötigen zu übertragende bzw. zu speichernde und datenreduzierte Tonsignale nur eine geringe Übertragungs- bzw. Speicherkapazität.

Dies führt dazu, daß Tonsignale auch über schmalbandige Leitungen in Echtzeit übertragen werden können. Dabei wird die Datenrate der Tonsignale so gewählt, daß die entweder den qualitativen Ansprüchen bzw. den wirtschaftlichen Anforderungen genügen. Eine hohe Datenrate weist eine entsprechend hohe Qualität auf, andererseits benötigt sie auch eine größere Kanal- bzw. Speicherkapazität, was wiederum höhere Kosten verursacht. Bei sehr schmalbandigen Übertragungskanälen muß, wenn keine breitbandigen Kanäle zur Verfügung stehen, die Übertragung hoch qualitativer, d. h. große Datenmengen aufweisender Tonsignale in einer n-fachen Echtzeit mit n > 1 durchgeführt werden.

Besonders bevorzugt ist daher eine Ausführungsform der Erfindung bei der bitratenreduzierte Tonsignale zu versenden sind und mehrere Übertragungskanäle und/oder Bitraten zur Übertragung der Tonsignale zur Verfügung stehen. Dann kann aufgrund des erfindungsgemäßen Verfahrens der Übertragungskanal und/oder die Bitrate bei der Übertragung der Tonsignale derart gewählt werden, daß das Tonsignal in Echtzeit oder sogar schneller als Echtzeit übertragen werden kann.

Vorteilhafte Weiterbildungen und Ausgestaltungen des erfindungsgemäßen Verfahrens ergeben sich aus den Unteransprüchen.

Darüber hinaus ist Aufgabe der Erfindung, eine Vorrichtung zum Codieren von digitalisierten Tonsignalen zur Verfügung zu stellen, welche die eingangs genannten Probleme vermeidet und eine Umcodierung des Tonsignals nach einer erfolgten Codierung nicht mehr notwendig ist.

Diese Aufgabe wird erfindungsgemäß durch eine Vorrichtung mit den Merkmalen nach Anspruch 15 gelöst.

Der Vorteil der erfindungsgemäßen Vorrichtung liegt darin, daß das Codierformat von vornherein die weitere Verarbeitung, d. h. beispielsweise die Übertragung oder Speicherung des Tonsignals, berücksichtigt. Dadurch kann es nicht zu einer falschen Codierung des Tonsignals in dem Sinne kommen, daß das Tonsignal in einem Codierformat codiert wird, welches nicht zu den gewählten Übertragungs- oder Weiterverarbeitungseinrichtungen paßt, wie z. B. einer Speichereinrichtung.

Die Erfindung zeichnet sich dadurch aus, daß mit Hilfe einer Steuereinrichtung, die einen Testsignalgeber aufweist, der ein Testsignal aussendet, mit dessen Hilfe die Steuereinrichtung die Eigenschaften der angeschlossenen Einrichtung, so z. B. die Bitrate des angeschlossenen Übertragungskanals, feststellt, das Codierformat entsprechend mit Hilfe der Steuereinrichtung automatisch gewählt wird. Der Benutzer braucht daher nicht manuell in den Auswahlvorgang des gewünschten Codierformates einzugreifen. Es kommt daher vorteilhaft zu einer erheblichen Bedienungvereinfachung. Denn es ist zum einen eine manuelle Einstellung des Codierformates überflüssig, und darüber hinaus kommt der Benutzer der Vorrichtung auch nicht in Verlegenheit, wenn er - beispielsweise als Laie - die entsprechenden Kenntnisse über den Übertragungskanal oder die empfangsseitigen Decodierungsmöglichkeiten nicht hat. Die Erfindung zeichnet sich daher besonders durch ihre Benutzerfreundlichkeit aus.

Bei einer weiteren Ausführungsform der Erfindung ist an der Steuereinrichtung eine Anzeige-Eingabeeinrichtung vorgesehen, die es ermöglicht, daß ein Benutzer ein zu verwendendes Codierformat vorgibt. Somit kann auch dann das richtige Codierformat gewählt werden, wenn das zu der gewählten Übertragungseinrichtung oder Speichereinrichtung oder Decodiereinrichtung passende Format nicht bekannt ist und auch ein Erkennen mit Hilfe des Testsignals nicht möglich ist. Besonders bevorzugt ist es dabei, daß der Benutzer aus vorgegebenen Formaten auswählen kann; es ist jedoch auch möglich, daß der Benutzer völlig frei eine bestimmte Codierung vorgibt oder gar eine Codierung ganz unterbindet.

Weitere vorteilhafte Ausführungsformen der erfindungsgemäßen Vorrichtung sind in den Unteransprüchen angegeben.

Die Erfindung wird nun anhand eines Ausführungsbeispiels gemäß der beigefügten Zeichnungen näher erläutert. Es zeigen:
- Figur 1: ein Blockschaltbild des sendeseitigen Aufbaus einer Ausführungsform der erfindungsgemäßen Vorrichtung zum Codieren von Tonsignalen bzw. eine Möglichkeit zur Ausführung des erfindungsgemäßen Verfahrens; und
- Figur 2: ein Blockschaltbild einer empfangsseitigen Decodier- und Speichereinrichtung zum weiteren Veranschaulichen der Erfindung.

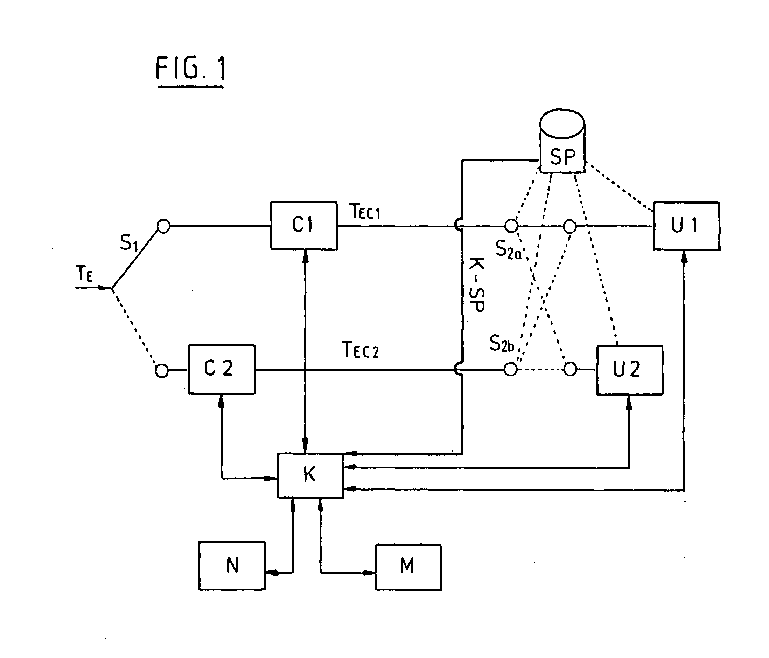

Die Figur 1 zeigt ein Blockschaltbild des sendeseitigen Aufbaus einer Anlage zur Realisierung einer Ausführungsform des erfindungsgemäßen Verfahrens. Gemäß Figur 1 wird ein digitalisiertes, monophones Tonsignal T_{E} entsprechend einer Schalterstellung eines Schalters S1 einem der zur Verfügung stehenden Codieralgorithmen C1 oder C2 zugeführt. Das Ausgangssignal T_{EC1} bzw. T_{EC2} der Codieralgorithmusstufe C 1 bzw. C2 wird entsprechend einer Schalterstellung von Schaltern S₂ₐ bzw. S_{2b} Übertragungskanälen U1 oder U2 oder einer Speichereinheit SP zugeführt. Das in der Speichereinheit SP gespeicherte Signal T_{EC1} bzw. T_{EC2} kann zu einem späteren Zeitpunkt einem der Übertragungskanäle U1 oder U2 zugeführt werden. Die Steuerung der Schalter S1, S₂ₐ und S_{2b} regelt eine Steuereinheit K in Abhängigkeit von an einer als eine Eingabe-/Anzeigeeinrichtung dienenden Benutzerschnittstelle N eingestellten und/oder von in einem Parameterspeicher M gespeicherten Eigenschaften bzw. Parameter des gewünschten Codierformates. Weiterhin kann die Steuereinheit K die Schalter S1, S₂ₐ und S_{2b} in Abhängigkeit eines zuvor an die Leitungen U1 bzw. U2 oder an den Speicher SP gesandten Testsignals steuern. Das Testsignal gibt der Steuereinheit K die Information über die Eigenschaften bzw. Parameter der Kanäle U1 oder U2 bzw. des Speichers SP. Zur Signalkommunikation zwischen dem Speicher SP und der Steuereinheit K kann eine zusätzliche direkte Verbindung K-SP hergestellt werden. Mit diesen Informationen wählt die Steuereinheit K dann das diesen Eigenschaften bzw. Parametern entsprechende Codierformat C1 oder C2, indem sie den Schalter S1 entsprechend stellt. So wird insbesondere der Parameter Bitrate der Codieralgorithmusstufe C1 bzw. C2 von der Steuereinheit K in Abhängigkeit der an der Benutzerschnittstelle N eingestellten und/oder der in dem Parameterspeicher M gespeicherten Parameter und/oder der von dem Testsignal erkannten, notwendigen Parameter für die Übertragungkanäle U1 bzw. U2 eingestellt.

Ein Benutzer kann mittels der Benutzerschnittstelle N (nicht dargestellte) Empfängerparametersätze E1, E2 oder E3 unter Verwendung eines (nicht dargestellten) Schalters selektieren und deren Daten, z.B. Bitrate, Übertragungskanal sowie gegebenenfalls auch Codieralgorithmus aus dem Parameterspeicher M auslesen. Der Benutzer kann auch mittels der Benutzerschnittstelle N die Parameter der Empfängerparametersätze ändern und abspeichern bzw. übersteuern, so daß die Parameter der Benutzerschnittstelle N und nicht die des Parameterspeichers verwendet werden. Dies kann aufgrund der aktuellen auszuführenden Übertragung und/oder Speicherung notwendig sein.

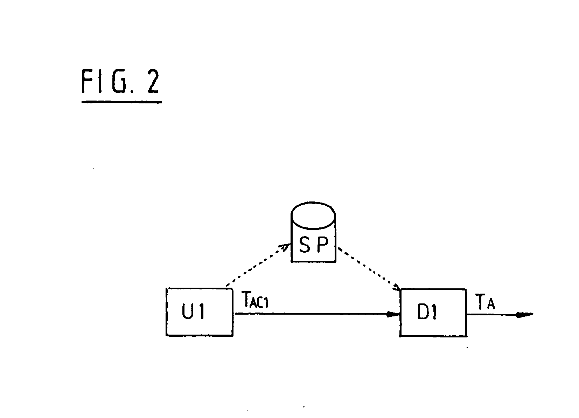

Die Figur 2 zeigt zur Veranschaulichung der Erfindung ein Blockschaltbild einer empfangsseitigen Einrichtung. Diese Einrichtung entspricht hinsichtlich der dort verwendeten Parameter dem Empfängerparametersatz E1 aus der Figur 1. Das Ausgangssignal T_{AC1} des Übertragungskanals U1 wird der Decodierungsalgorithmusstufe D1 zugeführt und dort entsprechend der Decodiervorschrift decodiert. Alternativ oder simultan kann das Ausgangssignal T_{AC1} des Übertragungskanals U1 auch der Speichereinheit SP zugeführt werden. Das Ausgangssignal der Decodieralgorithmusstufe T_{A} ist ein digitalisiertes und monophones Tonsignal.

Aufgrund des erfindungsgemäßen Verfahrens wurde der Decodierungsalgorithmus der Decodierungsalgorithmusstufe D1 beispielsweise durch ein an die Decodierungsalgorithmusstufe gesandtes Testsignal von der Steuereinheit K festgestellt. Die Codierung (siehe Fig. 1) wurde daher in Anpassung an die erkannte Decodierungsalgorithmusstufe vorgenommen. Somit erfolgt empfangsseitig eine problemlose Decodierung durch D1.

## Patentansprüche

1. Verfahren zum Codieren von digitalisierten Tonsignalen (T_{E}) mit einer Codiereinrichtung (C1, C2) zur Codierung (T_{E}) des Tonsignals in einem von einer Steuereinrichtung (K) bestimmten Codierformat und einer Verarbeitungseinrichtung zur Verarbeitung des codierten Tonsignals,
**dadurch gekennzeichnet, dass** das Codierformat automatisch in Abhängigkeit von den Eigenschaften der Verarbeitungseinrichtung (U1, U2, SP, D1) von der Steuereinrichtung (K) ausgewählt wird und zur Auswahl des Codierformats die Eigenschaften der Verarbeitungseinrichtung (U1, U2, SP, D1) mittels eines von einem Testsignalgeber der Steuereinrichtung (K) an die Verarbeitungseinrichtung gerichteten Testsignals ermittelt werden.

2. Verfahren nach Anspruch 1,
**dadurch gekennzeichnet, daß** die Verarbeitungseinrichtung (U1, U2, SP, D1) eine Übertragungseinrichtung (U1, U2) zum Übertragen des codierten Tonsignals (T_{E}) und/oder eine Speichereinrichtung (SP) zur Speicherung des codierten Tonsignals (T_{E}) und/oder eine Decodiereinrichtung (D1) zur Decodierung des codierten Tonsignals (T_{E}) ist.

3. Verfahren nach einem der Ansprüche 1 oder 2,
**dadurch gekennzeichnet, daß** die Verarbeitungseinrichtung (U1, U2, SP, D1) eine Übertragungseinrichtung (U1, U2) zum Übertragen des codierten Tonsignals (T_{E}) ist, und daß die Übertragungseinrichtung (U1, U2) zum gleichzeitigen Senden und Empfangen des codierten Tonsignals (T_{E}) benutzt wird.

4. Verfahren nach einem der vorstehenden Ansprüche,
**dadurch gekennzeichnet, daß** die Verarbeitungseinrichtung (U1, U2, SP, D1) eine Übertragungseinrichtung (U1, U2) zum Übertragen des codierten Tonsignals (TE) ist, und daß die Übertragungseinrichtung (U1, U2) eine Decodiereinrichtung aufweist zum gleichzeitigen Decodieren bei dem Empfangen eines codierten Tonsignals (T_{E}).

5. Verfahren nach einem der vorstehenden Ansprüche,
**dadurch gekennzeichnet, daß** als Eigenschaft der Verarbeitungseinrichtung (U1, U2, SP, D1) deren Prozessorleistungsfähigkeit herangezogen wird, so daß das Codierformat derart bestimmt wird, daß es von der Verarbeitungseinrichtung (U1, U2, SP, D1) in Echtzeit verarbeitet wird.

6. Verfahren nach Anspruch 5,
**dadurch gekennzeichnet, daß** die Verarbeitungseinrichtung (U1, U2, SP, D1) eine Übertragungseinrichtung (U1, U2) zum Übertragen des codierten Tonsignals (T_{E}) ist, und daß das Codierformat in Abhängigkeit von der Leistungsfähigkeit der Übertragungseinrichtung (U1, U2) bestimmt wird, so daß die Übertragungseinrichtung (U1, U2) die Übertragung in Echtzeit vornehmen kann.

7. Verfahren nach einem der vorstehenden Ansprüche,
**dadurch gekennzeichnet, daß** die Eigenschaften der Verarbeitungseinrichtung (U1, U2, SP, D1) aus einem Speicher (M) abgerufen werden.

8. Verfahren nach einem der vorstehenden Ansprüche,
**dadurch gekennzeichnet, daß** das Tonsignal (T_{E}) in einem bitratenreduzierten Codierformat codiert wird.

9. Verfahren nach einem der vorstehenden Ansprüche,
**dadurch gekennzeichnet, daß** das Tonsignal (T_{E}) unter Berücksichtigung psychoakustischer Phänomene quellencodiert wird.

10. Verfahren nach einem der vorstehenden Ansprüche,
**dadurch gekennzeichnet, daß** als Verarbeitungseinrichtungen (U1, U2, SP, D1) Übertragungs- und/oder Speichereinrichtungen verschiedener Kapazität zur Verfügung stehen und vor der Übertragung und/oder der Speicherung der Tonsignale (T_{E}) bei Tonsignalen (T_{E}) höherer Qualität, d.h. größerer Datenmenge, eine Übertragungs- (U1, U2) und/oder Speichereinrichtung (SP) größerer Kapazität gewählt wird und bei der Übertragung und/oder Speicherung von Tonsignalen (T_{E}) von geringerer Qualität, d.h. kleinerer Datenmenge, eine Übertragungs- (U1, U2) und/oder Speichereinrichtung (SP) kleinerer Kapazität gewählt wird.

11. Verfahren nach einem der vorstehenden Ansprüche,
**dadurch gekennzeichnet, daß** die Tonsignale (T_{E}) mittels der Codiereinrichtung (C1, C2) bitratenreduziert codiert werden, daß mehrere Übertragungskanäle (U1, U2) und/oder Bitraten zur Übertragung des Tonsignals (T_{E}) zur Verfügung stehen, und daß der Übertragungskanal (U1, U2) und/oder die Bitrate bei der Übertragung derart gewählt werden, daß das Tonsignal (T_{E}) in Echtzeit übertragen werden kann.

12. Verfahren nach Anspruch 11,
**dadurch gekennzeichnet, daß** zum Betrieb in Echtzeit von einer fest vorgegebenen Rechenleistung ausgegangen wird.

13. Verfahren nach den Ansprüchen 4 und 12 und nach einem der vorstehenden Ansprüche,
**dadurch gekennzeichnet, daß** bei gleichzeitigem Senden und Empfangen in Echtzeit die Codierformate der Codier- und Decodiereinrichtung entsprechend der vorgegebenen Rechenleistung gewählt werden.

14. Verfahren nach Anspruch 13,
**dadurch gekennzeichnet, daß** mittels einer Eingabeeinrichtung eine Voreinstellung hinsichtlich der Verteilung der Rechenleistung und somit der Wahl des Codierformates hinsichtlich einer Präferenz für die Codiereinrichtung oder die Decodiereinrichtung oder einer Gleichstellung beider erfolgt.

15. Vorrichtung zum Codieren von digitalisierten Tonsignalen (T_{E}),
mit einer Codiereinrichtung (C1, C2) und einer Steuereinrichtung (K), wobei die Codiereinrichtung (C1, C2) zur Codierung (T_{E}) des Tonsignals (T_{E}) in einem von einer Steuereinrichtung (K) bestimmten Codierformat ausgebildet ist,
**dadurch gekennzeichnet, dass** mit der Steuereinrichtung (K) automatisch das für die Codierung zu verwendende Codierformat in Abhängigkeit der Eigenschaften einer Verarbeitungseinrichtung (U1, U2, SP, D1) zur weiteren Verarbeitung der Tonsignale (T_{E}) vorgebbar ist und die Steuereinrichtung (K) einen Testsignalgeber aufweist, mit welchem ein Testsignal aussendbar ist, mit dessen Hilfe die Eigenschaften der angeschlossenen Verarbeitungseinrichtung (U1, U2, SP, D1) feststellbar sind.

16. Vorrichtung nach Anspruch 15,
wobei an der Vorrichtung eine mit der Steuereinrichtung (K) verbundene Übertragungseinrichtung (U1, U2) als Verarbeitungseinrichtung zur Übertragung der Tonsignale (T_{E}) an einen Empfänger (D1) angeschlossen ist,
**dadurch gekennzeichnet, daß** das Codierformat mittels der Steuereinrichtung (K) den Eigenschaften der Übertragungseinrichtung (U1, U2) angepaßt ist.

17. Vorrichtung nach Anspruch 16,
**dadurch gekennzeichnet, daß** das Codierformat mittels der Steuereinrichtung (K) der Bitrate der Übertragungseinrichtung (U1, U2) angepaßt ist.

18. Vorrichtung nach einem der Ansprüche 15 bis 17, mit einer mit der Steuereinrichtung (K) verbundenen Speichereinrichtung (SP) als Verarbeitungseinrichtung zur Speicherung der Tonsignale (T_{E}),
**dadurch gekennzeichnet, daß** das Codierformat mittels der Steuereinrichtung (K) den Eigenschaften der Speichereinrichtung (SP) angepaßt ist.

19. Vorrichtung nach einem der Ansprüche 15 bis 18,
mit einer mit der Steuereinrichtung (K) verbundenen Decodiereinrichtung (D1) als Verarbeitungseinrichtung zur Decodierung der Tonsignale (T_{E}),
**dadurch gekennzeichnet, daß** das Codierformat mittels der Steuereinrichtung (K) den Eigenschaften der Decodiereinrichtung (D1) angepaßt ist.

20. Vorrichtung nach Anspruch 16,
**dadurch gekennzeichnet, daß** die Steuereinrichtung (K) einen Testsignalempfänger aufweist, welcher das Testsignal empfängt, mit dessen Hilfe die Steuereinrichtung (K) die Eigenschaften der angeschlossenen Verarbeitungseinrichtung (U1, U2, SP, D1) feststellt und das Codierformat entsprechend dieser Eigenschaften wählt.

21. Vorrichtung nach einem der Ansprüche 15 oder 20,
**dadurch gekennzeichnet, daß** das Testsignal ein codiertes Tonsignal ist.

22. Vorrichtung nach einem der Ansprüche 15 bis 21,
**gekennzeichnet durch** eine mit der Steuereinrichtung (K) verbundene Anzeige-/Eingabeeinrichtung (N) mittels derer ein von der Vorrichtung zu verwendendes Codierformat vorgebbar ist.

23. Vorrichtung nach einem der Ansprüche 15 bis 22,
**gekennzeichnet durch** eine mit der Steuereinrichtung (K) verbundene Speichereinheit (M), in der mindestens ein Codierformat abgespeichert ist.

24. Vorrichtung nach Anspruch 23,
**dadurch gekennzeichnet, daß** in der Speichereinheit (M) die Eigenschaften der Verarbeitungseinrichtung (U1, U2, SP, K) und die den Eigenschaften entsprechenden Codierformate gespeichert sind.

25. Vorrichtung nach einem der Ansprüche 15 bis 24,
**dadurch gekennzeichnet, daß** alle Einstellungen manuell durchführbar sind.

26. Vorrichtung nach einem der Ansprüche 15 bis 25,
**dadurch gekennzeichnet, daß** eine Anzeige vorgesehen ist, welche die aktuelle Übertragungszeit der Übertragungseinrichtung (U1, U2) / Speicherzeit der Speichereinrichtung (SP) und/oder die verbleibende Übertragungszeit der Übertragungseinrichtung (U1, U2) / Speicherzeit der Speichereinrichtung (SP) anzeigt.

27. Vorrichtung nach einem der Ansprüche 15 bis 26,
**dadurch gekennzeichnet, daß** eine Mischstufe vorgesehen ist, welche vor der Übertragung mit der Übertragungseinrichtung (U1, U2) und/oder Speicherung mit der Speichereinrichtung (SP) mehrere monophone und/oder stereophone Tonsignale (T_{E}) zusammenmischt.

28. Vorrichtung nach einem der Ansprüche 15 bis 27,
**dadurch gekennzeichnet, daß** das mit der Übertragungseinrichtung (U1, U2) zu übertragende und/oder mit der Speichereinrichtung (SP) zu speichernde und/oder von der Übertragungseinrichtung (U1, U2) empfangene Tonsignal (T_{E}) in einer Abhöreinrichtung abhörbar ist.

29. Vorrichtung nach einem der Ansprüche 15 bis 28,
**dadurch gekennzeichnet, daß** der Pegel des mit der Übertragungseinrichtung (U1, U2) zu übertragenden und/oder mit der Speichereinrichtung (SP) zu speichernden und/oder von der Übertragungseinrichtung (U1, U2) empfangenen Tonsignals (T_{E}) mittels einer Pegelanzeige angezeigt werden kann.

30. Vorrichtung nach einem der Ansprüche 15 bis 29,
**dadurch gekennzeichnet, daß** für verschiedene Verarbeitungseinrichtungen (U1, U2, SP, D1) jeweils eine Steuereinrichtung (K) vorgesehen ist, wobei die einzelnen Steuereinrichtungen (K) die Eigenschaften der von ihr abgefragten Verarbeitungseinrichtung (U1, U2, SP, D1) mit einer oder mehreren der anderen Steuereinrichtungen (K) austauschen.

## Claims

1. Method for encoding digitised audio signals (T_{E}) with an encoding device (C1, C2) for encoding (T_{E}) the audio signal in an encoding format, determined by a control device (K), and a processing device for processing the encoded audio signal,
**characterised in that** the encoding format is automatically selected by the control device (K) in dependence on the properties of the processing device (U1, U2, SP, D1) and, for selection of the encoding format, the properties of the processing device (U1, U2, SP, D1) are ascertained by means of a test signal directed by a test signal generator of the control device (K) to the processing device.

2. Method according to Claim 1,
**characterised in that** the processing device (U1, U2, SP, D1) is a transmission device (U1, U2) for transmitting the encoded audio signal (T_{E}) and/or a storage device (SP) for storing the encoded audio signal (T_{E}) and/or a decoding device (D1) for decoding the encoded audio signal (T_{E}).

3. Method according to one of Claims 1 and 2,
**characterised in that** the processing device (U1, U2, SP, D1) is a transmission device (U1, U2) for transmitting the encoded audio signal (T_{E}), and **in that** the transmission device (U1, U2) is used for simultaneously transmitting and receiving the encoded audio signal (T_{E}).

4. Method according to one of the preceding claims,
**characterised in that** the processing device (U1, U2, SP, D1) is a transmission device (U1, U2) for transmitting the encoded signal (TE), and **in that** the transmission device (U1, U2) has a decoding device for simultaneous decoding upon the reception of an encoded audio signal (T_{E}).

5. Method according to one of the preceding claims,
**characterised in that** the processor power of the processing device (U1, U2, SP, D1) is used as the property thereof, so that the encoding format is determined in such a way that it is processed by the processing device (U1, U2, SP, D1) in real time.

6. Method according to Claim 5,
**characterised in that** the processing device (U1, U2, SP, D1) is a transmission device (U1, U2) for transmitting the encoded audio signal (T_{E}), and **in that** the encoding format is determined in dependence on the power of the transmission device (U1, U2), so that the transmission device (U1, U2) can effect the transmission in real time.

7. Method according to one of the preceding claims,
**characterised in that** the properties of the processing device (U1, U2, SP, D1) are fetched from a storage means (M).

8. Method according to one of the preceding claims,
**characterised in that** the audio signal (T_{E}) is encoded in a bit rate-reduced encoding format.

9. Method according to one of the preceding claims,
**characterised in that** the audio signal (T_{E}) is source-encoded having regard to psycho-acoustic phenomena.

10. Method according to one of the preceding claims,
**characterised in that** transmission and/or storage devices of varying capacity are available as processing devices (U1, U2, SP, D1) and, prior to transmission and/or storage of the audio signals (T_{E}), in the case of audio signals (T_{E}) of higher quality, that is to say with a larger amount of data, a transmission device (U1, U2) and/or storage device (SP) of larger capacity is selected and upon the transmission and/or storage of audio signals (T_{E}) of lower quality, that is to say with a smaller amount of data, a transmission device (U1, U2) and/or storage device (SP) of smaller capacity is selected.

11. Method according to one of the preceding claims,
**characterised in that** the audio signals (T_{E}) are encoded in bit rate-reduced form by means of the encoding device (C1, C2), **in that** a plurality of transmission channels (U1, U2) and/or bit rates are available for transmission of the audio signal (T_{E}), and **in that** the transmission channel (U1, U2) and/or the bit rate upon the transmission are so selected that the audio signal (T_{E}) can be transmitted in real time.

12. Method according to Claim 11,
**characterised in that** a fixedly preset computing power is adopted for operation in real time.

13. Method according to Claims 4 and 12 and according to one of the preceding claims,
**characterised in that**, with simultaneous transmission and reception in real time, the encoding formats of the encoding and decoding devices are selected in accordance with the preset computing power.

14. Method according to Claim 13,
**characterised in that** presetting in respect of the distribution of the computing power and thus the choice of the encoding format in respect of a preference for the encoding device or the decoding device or parity of the two is effected by means of an input device.

15. Apparatus for encoding digitised audio signals (T_{E}), having an encoding device (C1, C2) and a control device (K), the encoding device (C1, C2) being configured for encoding (T_{E}) the audio signal (T_{E}) in an encoding format determined by a control device (K),
**characterised in that** the encoding format to be used for encoding can be automatically preset by the control device (K) in dependence on the properties of a processing device (U1, U2, SP, D1) for further processing of the audio signals (T_{E}), and the control device (K) has a test signal generator which emits a test signal, with the aid of which the properties of the connected processing device (U1, U2, SP, D1) can be ascertained.

16. Apparatus according to Claim 15, there being connected to the apparatus a transmission device (U1, U2), connected to the control device (K), as a processing device for transmission of the audio signals (T_{E}) to a receiver (D1),
**characterised in that** the encoding format is adapted by means of the control device (K) to the properties of the transmission device (U1, U2).

17. Apparatus according to Claim 16,
**characterised in that** the encoding format is adapted by means of the control device (K) to the bit rate of the transmission device (U1, U2).

18. Apparatus according to one of Claims 15 to 17, having a storage device (SP), connected to the control device (K), as a processing device for storage of the audio signals (T_{E}),
**characterised in that** the encoding format is adapted by means of the control device (K) to the properties of the storage device (SP).

19. Apparatus according to one of Claims 15 to 18, having a decoding device (D1), connected to the control device (K), as a processing device for decoding of the audio signals (T_{E}),
**characterised in that** the encoding format is adapted by means of the control device (K) to the properties of the decoding device (D1).

20. Apparatus according to Claim 16,
**characterised in that** the control device (K) has a test signal receiver which receives the test signal, with the aid of which the control device (K) ascertains the properties of the connected processing device (U1, U2, SP, D1) and selects the encoding format in accordance with those properties.

21. Apparatus according to one of Claims 15 and 20,
**characterised in that** the test signal is an encoded audio signal.

22. Apparatus according to one of Claims 15 to 21,
**characterised by** a display/input device (N) which is connected to the control device (K) and by means of which an encoding format to be used by the apparatus can be preset.

23. Apparatus according to one of Claims 15 to 22,
**characterised by** a storage unit (M) which is connected to the control device (K) and in which at least one encoding format is stored.

24. Apparatus according to Claim 23,
**characterised in that** there are stored in the storage unit (M) the properties of the processing device (U1, U2, SP, K) and the encoding formats corresponding to the properties.

25. Apparatus according to one of Claims 15 to 24,
**characterised in that** all settings can be implemented manually.

26. Apparatus according to one of Claims 15 to 25,
**characterised in that** there is provided a display which displays the current transmission time of the transmission device (U1, U2)/storage time of the storage device (SP) and/or the remaining transmission time of the transmission device (U1, U2)/storage time of the storage device (SP).

27. Apparatus according to one of Claims 15 to 26,
**characterised in that** there is provided a mixing stage which, prior to transmission with the transmission device (U1, U2) and/or storage with the storage device (SP), mixes together a plurality of monophonic and/or stereophonic audio signals (T_{E}).

28. Apparatus according to one of Claims 15 to 27,
**characterised in that** the audio signal (T_{E}) which is to be transmitted with the transmission device (U1, U2) and/or stored with the storage device (SP) and/or which is received from the transmission device (U1, U2) can be listened to in a listening device.

29. Apparatus according to one of Claims 15 to 28,
**characterised in that** the level of the audio signal (T_{E}) which is to be transmitted by the transmission device (U1, U2) and/or stored by the storage device (SP) and/or which is received from the transmission device (U1, U2) can be displayed by means of a level display.

30. Apparatus according to one of Claims 15 to 29,
**characterised in that** there is provided, for respective ones of various processing devices (U1, U2, SP, D1), a respective control device (K), the individual control devices (K) exchanging the properties of the processing device (U1, U2, SP, D1) retrieved thereby with one or more of the other control devices (K).

## Revendications

1. Procédé de codage de signaux audio numérisés (T_{E}) avec un dispositif de codage (C1, C2) pour le codage (T_{E}) du signal audio dans un format de codage déterminé par un dispositif de commande (K) et avec un dispositif de traitement pour le traitement du signal audio codé,
**caractérisé en ce que** le format de codage est sélectionné automatiquement, en fonction des propriétés du dispositif de traitement (U1, U2, SP, D1), par le dispositif de commande (K), et **en ce que**, pour la sélection du format de codage, on détermine les propriétés du dispositif de traitement (U1, U2, SP, D1) au moyen d'un signal d'essai qui est émis par un émetteur de signal d'essai du dispositif de commande (K) à l'attention du dispositif de traitement.

2. Procédé selon la revendication 1,
**caractérisé en ce que** le dispositif de traitement (U1, U2, SP, D1) est un dispositif de transmission (U1, U2) pour la transmission du signal audio codé (T_{E}) et/ou un dispositif de mémoire (SP) pour la mise en mémoire du signal audio codé (T_{E}) et/ou un dispositif de décodage (D1) pour le décodage du signal audio codé (T_{E}).

3. Procédé selon l'une quelconque des revendications 1 et 2,
**caractérisé en ce que** le dispositif de traitement (U1, U2, SP, D1) est un dispositif de transmission (U1, U2) pour la transmission du signal audio codé (T_{E}), et **en ce que** le dispositif de transmission (U1, U2) est utilisé pour l'émission et la réception simultanée du signal audio codé (T_{E}).

4. Procédé selon l'une quelconque des revendications précédentes,
**caractérisé en ce que** le dispositif de traitement (U1, U2, SP, D1) est un dispositif de transmission (U1, U2) pour la transmission du signal audio codé (T_{E}), et **en ce que** le dispositif de transmission (U1, U2) présente un dispositif de décodage pour le décodage simultané lors de la réception d'un signal audio codé (T_{E}).

5. Procédé selon l'une quelconque des revendications précédentes,
**caractérisé en ce que** l'on fait appel, en guise de propriété du dispositif de traitement (U1, U2, SP, D1), à la capacité du processeur de celui-ci, de sorte que le format de codage est déterminé de manière à être traité en temps réel par le dispositif de traitement (U1 U2, SP, D1).

6. Procédé selon la revendication 5,
**caractérisé en ce que** le dispositif de traitement (U1 U2, SP, D1) est un dispositif de transmission (U1, U2) pour la transmission du signal audio codé (T_{E}), et **en ce que** le format de codage est déterminé en fonction de la puissance du dispositif de transmission (U1, U2), de manière à ce que le dispositif de transmission (U1, U2) puisse effectuer la transmission en temps réel.

7. Procédé selon l'une quelconque des revendications précédentes,
**caractérisé en ce que** les propriétés du dispositif de traitement (U1, U2, SP, D1) peuvent être extraites d'une mémoire (M).

8. Procédé selon l'une quelconque des revendications précédentes,
**caractérisé en ce que** le signal audio (T_{E}) est codé avec un format de codage à débit binaire réduit.

9. Procédé selon l'une quelconque des revendications précédentes,
**caractérisé en ce que** le signal audio (T_{E}) est soumis à un codage de source en tenant compte de phénomènes psycho-acoustiques.

10. Procédé selon l'une quelconque des revendications précédentes,
**caractérisé en ce que**, en guise de dispositifs de traitement (U1, U2, SP, D1), des dispositifs de transmission et/ou de mémoire de différentes capacités sont disponibles, et **en ce que** l'on sélectionne, avant la transmission et/ou la mise en mémoire des signaux audio (T_{E}), en cas de signaux audio (T_{E}) de qualité supérieure, c'est-à-dire de quantités de données plus importantes, un dispositif de transmission (U1, U2) et/ou un dispositif de mémoire (SP) de plus grande capacité, et **en ce que**, lors de la transmission et/ou mise en mémoire de signaux audio (T_{E}) de moindre qualité, c'est-à-dire de plus faibles quantités de données, on sélectionne un dispositif de transmission (U1, U2) et/ou de mémoire (SP) de plus faible capacité.

11. Procédé selon l'une quelconque des revendications précédentes,
**caractérisé en ce que** les signaux audio (T_{E}) sont soumis à un codage à débit binaire réduit au moyen du dispositif de codage (C1, C2), **en ce que** plusieurs canaux de transmission (U1, U2) et/ou débits binaires sont disponibles pour la transmission du signal audio (T_{E}), et **en ce que** le canal de transmission (U1, U2) et/ou le débit binaire lors de la transmission sont sélectionnés de manière à pouvoir transmettre le signal audio (T_{E}) en temps réel.

12. Procédé selon la revendication 11,
**caractérisé en ce que**, pour le fonctionnement en temps réel, on se base sur une puissance de calcul prédéfinie de manière fixe.

13. Procédé selon les revendications 4 et 12 et selon l'une quelconque des revendications précédentes,
**caractérisé en ce que**, lors de l'émission et de la réception simultanée en temps réel, les formats de codage du dispositif de codage et de décodage sont sélectionnés en fonction de la puissance de calcul prédéfinie.

14. Procédé selon la revendication 13,
**caractérisé en ce que**, au moyen d'un dispositif de saisie, il s'en suit un préréglage en vue de la répartition de la puissance de calcul, et donc du choix du format de codage, compte tenu d'une préférence pour le dispositif de codage ou le dispositif de décodage ou bien d'une équivalence entre les deux.

15. Dispositif pour le codage de signaux audio numérisés (T_{E}),
avec un dispositif de codage (C1, C2) et un dispositif de commande (K), le dispositif de codage (C1, C2) étant réalisé pour le codage (T_{E}) du signal audio (T_{E}) dans un format de codage déterminé par un dispositif de commande (K),
**caractérisé en ce qu'**il est possible, avec le dispositif de commande (K), d'automatiquement prédéfinir le format de codage à utiliser pour le codage en fonction des propriétés d'un dispositif de traitement (U1, U2, SP, D1) pour le traitement ultérieur des signaux audio (T_{E}), et **en ce que** le dispositif de commande (K) présente un émetteur de signal d'essai, avec lequel on peut émettre un signal d'essai à l'aide duquel il est possible de vérifier les propriétés du dispositif de traitement raccordé (U1, U2, SP, D1).

16. Dispositif selon la revendication 15,
un dispositif de transmission (U1, U2) relié au dispositif de commande (K) étant raccordé au dispositif en guise de dispositif de traitement pour la transmission de signaux audio (T_{E}) à l'attention d'un récepteur (D1),
**caractérisé en ce que** le format de codage est adapté, au moyen du dispositif de commande (K), aux propriétés du dispositif de transmission (U1, U2).

17. Dispositif selon la revendication 16,
**caractérisé en ce que** le format de codage est adapté, au moyen du dispositif de commande (K), au débit binaire du dispositif de transmission (U1, U2).

18. Dispositif selon l'une quelconque des revendications 15 à 17,
avec un dispositif de mémoire (SP) relié au dispositif de commande (K) en guise de dispositif de traitement pour la mise en mémoire des signaux audio (T_{E}),
**caractérisé en ce que** le format de codage est adapté, au moyen du dispositif de commande (K), aux propriétés du dispositif de mémoire (SP).

19. Dispositif selon l'une quelconque des revendications 15 à 18,
avec un dispositif de décodage (D1) relié au dispositif de commande (K) en guise de dispositif de traitement pour le décodage des signaux audio (T_{E}),
**caractérisé en ce que** le format de codage est adapté, au moyen du dispositif de commande (K), aux propriétés du dispositif de décodage (D1).

20. Dispositif selon la revendication 16,
**caractérisé en ce que** le dispositif de commande (K) présente un récepteur de signal d'essai, lequel réceptionne le signal d'essai, à l'aide duquel le dispositif de commande (K) vérifie les propriétés du dispositif de traitement (U1, U2, SP, D1) raccordé et sélectionne le format de codage en fonction de ces propriétés.

21. Dispositif selon l'une des revendications 15 et 20,
**caractérisé en ce que** le signal d'essai est un signal audio codé.

22. Dispositif selon l'une quelconque des revendications 15 à 21,
**caractérisé par** un dispositif d'affichage/saisie (N) relié au dispositif de commande (K), au moyen duquel un format de codage à utiliser par le dispositif peut être prédéfini.

23. Dispositif selon l'une quelconque des revendications 15 à 22,
**caractérisé par** une unité de mémoire (M) reliée au dispositif de commande (K), dans laquelle au moins un format de codage est mis en mémoire.

24. Dispositif selon la revendication 23,
**caractérisé en ce que**, dans l'unité de mémoire (M), les propriétés du dispositif de traitement (U1, U2, SP, K) et les formats de codage correspondant aux propriétés sont mis en mémoire.

25. Dispositif selon l'une quelconque des revendications 15 à 24,
**caractérisé en que** tous les réglages peuvent être effectués manuellement.

26. Dispositif selon l'une quelconque des revendications 15 à 25,
**caractérisé en ce qu'**un afficheur est prévu, lequel affiche le temps de transmission réel du dispositif de transmission (U1, U2) / temps de mise en mémoire du dispositif de mémoire (SP) et / ou le temps de transmission restant du dispositif de transmission (U1, U2) / temps de mise en mémoire du dispositif de mémoire (SP).

27. Dispositif selon l'une quelconque des revendications 15 à 26,
**caractérisé en ce qu'**un étage mélangeur est prévu, lequel mélange, avant la transmission par le dispositif de transmission (U1, U2) et / ou la mise en mémoire par le dispositif de mémoire (SP), plusieurs signaux audio (T_{E}) monophoniques et/ou stéréophoniques.

28. Dispositif selon l'une quelconque des revendications 15 à 27,
**caractérisé en ce que** le signal audio (T_{E}) à transmettre par le dispositif de transmission (U1, U2) et / ou à mettre en mémoire par le dispositif de mémoire (SP) et / ou réceptionné par le dispositif de transmission (U1, U2) peut être intercepté dans un dispositif d'interception.

29. Dispositif selon l'une quelconque des revendications 15 à 28,
**caractérisé en ce que** le niveau du signal audio (T_{E}) à transmettre par le dispositif de transmission (U1, U2) et/ ou à mettre en mémoire par le dispositif de mémoire (SP) et / ou réceptionné par le dispositif de transmission (U1, U2), peut être affiché au moyen d'un affichage de niveau.

30. Dispositif selon l'une quelconque des revendications 15 à 29,
**caractérisé en ce que**, pour différents dispositifs de traitement (U1, U2, SP, D1), on prévoit respectivement un dispositif de commande (K), les dispositifs de commande (K) individuels échangeant les propriétés du dispositif de traitement (U1, U2, SP, D1) interrogé par eux avec un ou plusieurs autres dispositifs de commande (K).
